# EUROPEAN PATENT APPLICATION

(11) **EP 4 807 046 A1**
(43) Date of publication of application: **16.09.2026**
(21) Application number: 26159488.1
(22) Date of filing: 19.02.2026
(51) Int. Cl.: C25B 3/26, C25B 1/04, C25B 1/23, C25B 9/75, C25B 9/77, C25B 15/08, C25B 15/023, C25B 15/029

(54) **ELECTROLYSIS DEVICE AND METHOD OF CONTROLLING ELECTROLYSIS DEVICE**

(30) Priority: 14.03.2025 JP 2025041015
(71) Applicant: KABUSHIKI KAISHA TOSHIBA, Kawasaki-shi, Kanagawa (JP)
(72) Inventor: MIKOSHIBA, Satoshi, Kawasaki-shi, Kanagawa (JP); KITAGAWA, Ryota, Kawasaki-shi, Kanagawa (JP); KOFUJI, Yusuke, Kawasaki-shi, Kanagawa (JP); YONETSU, Maki, Kawasaki-shi, Kanagawa (JP); INOUE, Yusuke, Kawasaki-shi, Kanagawa (JP); KUDO, Yuki, Kawasaki-shi, Kanagawa (JP); FUJIWARA, Naoya, Kawasaki-shi, Kanagawa (JP)
(74) Representative: Hoffmann Eitle

(57) **Abstract**

An electrolysis device includes: an electrolysis cell stack having a first and a second flow path through which a first and a second fluid flows; a flow rate controller to control a flow rate of the first fluid through the first flow path; a controller; a flowmeter; and a concentration meter to measure a concentration of a reduction product in the second fluid. The controller is configured to calculate a variation in ratio of a supply flow rate to a theoretical flow rate of a reducible material in the cells using first data indicating a relation between a supply amount of the reducible material in the cell and a Faraday efficiency of the reduction product and using second data indicating a Faraday efficiency of the reduction product in the cell stack, and control the flow rate controller controlling the flow rate of the first fluid according to the variation.

## Description

### FIELD

Arrangements relate to an electrolysis device, a method of controlling an electrolysis device, an electrolysis system, and a method of controlling an electrolysis system.

### BACKGROUND

In recent years, concerns about the depletion of fossil fuels, such as petroleum and coal, have led to an increase in expectations for sustainably available renewable energy. From viewpoints of such energy problems and further environmental problems and the like, developments are being made for Power to Chemicals (P2C) technology which electrochemically reduces carbon dioxide to generate a storable chemical energy source, using renewable energy such as sunlight. An electrolysis device such as a carbon dioxide reaction device including an electrolysis device that implements the P2C technology includes an anode which oxidizes, for example, water (H₂O) to produce oxygen (O₂) and a cathode which reduces carbon dioxide (CO₂) to produce a carbon compound. The anode and the cathode of the carbon dioxide reaction device are connected to a power source derived from renewable energy such as solar power, hydropower, wind power, or geothermal power.

The cathode of the carbon dioxide reaction device is arranged, for example, to be immersed in water containing dissolved carbon dioxide or to be in contact with carbon dioxide flowing through a flow path. The cathode obtains a reduction potential of carbon dioxide from a power source derived from the renewable energy, thereby reducing carbon dioxide to produce a carbon compound such as carbon monoxide (CO), formic acid (HCOOH), methanol (CH₃OH), methane (CH₄), ethanol (C₂H₅OH), ethane (C₂H₆), ethylene (C₂H₄), formaldehyde (HCHO), ethylene glycol (C₂H₆O₂), acetic acid (CH₃COOH), or propanol (C₃H₇OH). The anode is arranged to be in contact with an electrolytic solution containing water and produces oxygen and hydrogen ions (H⁺). In the carbon dioxide reaction device, it is required to increase the utilization efficiency of carbon dioxide and the utilization efficiency and the utilization value of the reduction product of carbon dioxide.

### BRIEF DESCRIPTION OF THE DRAWINGS

FIG. 1 is a schematic diagram illustrating a configuration example of an electrolysis cell.
FIG. 2 is a schematic diagram illustrating a configuration example of an electrolysis cell stack.
FIG. 3 is a graph for explaining an example method of controlling an electrolysis device 1.
FIG. 4 is a schematic diagram illustrating a structure example of a characteristics evaluation device 100.

### DETAILED DESCRIPTION

An electrolysis device in an arrangement includes: an electrolysis cell stack including: a plurality of electrolysis cells each having an anode configured to oxidize an oxidizable material to produce an oxidation product, a cathode configured to reduce a reducible material to produce a reduction product, a separator provided between the anode and the cathode, an anode flow path which faces on the anode and through which an anode fluid containing the oxidizable material flows, and a cathode flow path which faces on the cathode and through which a cathode fluid containing gas of the reducible material flows; a first flow path which is connected to each of inlets of the cathode flow paths of the plurality of electrolysis cells, and through which a first fluid to be supplied to each of the cathode flow paths and containing the gas of the reducible material flows; and a second flow path which is connected to each of outlets of the cathode flow paths of the plurality of electrolysis cells, and through which a second fluid discharged from each of the cathode flow paths and containing the reduction product flows; a flow rate controller configured to control a flow rate of the first fluid flowing through the first flow path; a controller configured to control the flow rate controller; a flowmeter configured to measure a flow rate of the second fluid; and a concentration meter configured to measure a concentration of the reduction product in the second fluid. The controller is configured to calculate a variation in ratio of a supply flow rate to a theoretical flow rate of the reducible material in the plurality of electrolysis cells using a first data and a second data, and control an operation of the flow rate controller controlling the flow rate of the first fluid according to the variation, the first data indicating a relation between a supply amount of the reducible material in at least one of the plurality of electrolysis cells or at least one electrolysis cell corresponding to at least one of the plurality of electrolysis cells and a Faraday efficiency of the reduction product, and the second data indicating a Faraday efficiency of the reduction product in a whole of the electrolysis cell stack. The controller is configured to calculate the Faraday efficiency of the reduction product in the whole of the electrolysis cell stack from the measured flow rate and concentration to generate the second data.

Arrangements will be explained below with reference to the drawings. In the arrangements explained below, substantially the same components are denoted by the same reference signs and the explanation thereof may be partially omitted. The drawings are schematic, in which the relationship between the thickness and planar dimensions, a thickness ratio among the components, and the like may be different from actual ones.

Note that in this specification, "connecting" may include not only directly connecting but also indirectly connecting unless otherwise specified.

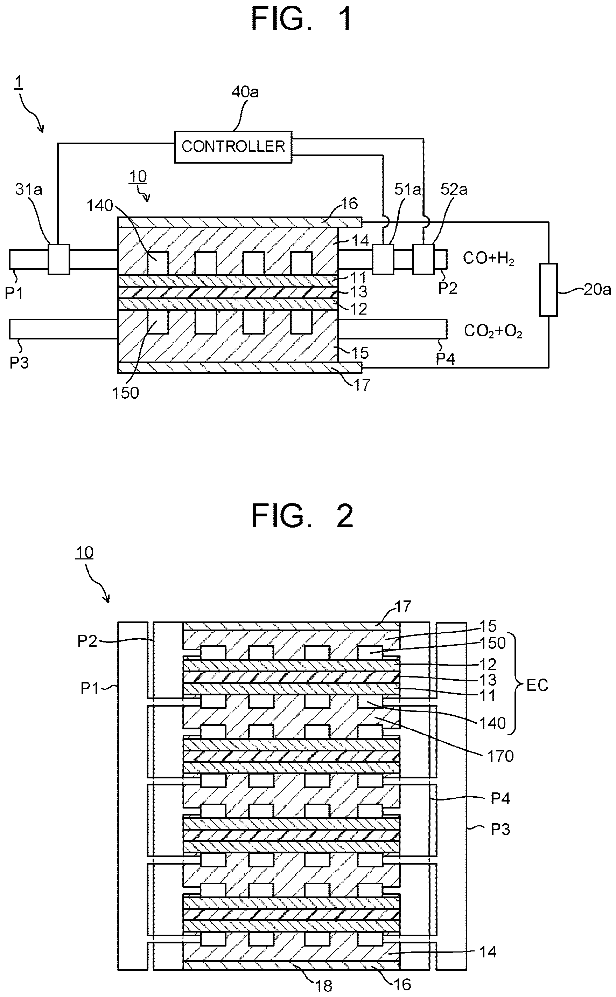

FIG. 1 is a schematic diagram for explaining a configuration example of an electrolysis cell. FIG. 1 illustrates an electrolysis device 1. The electrolysis device 1 includes an electrochemical reaction structure 10, a flow path P1, a flow path P3, a flow path P2, and a flow path P4.

The electrochemical reaction structure 10 has a cathode 11, an anode 12, a separator 13, a flow path plate 14, a flow path plate 15, a current collector 16, and a current collector 17.

The cathode 11 is, for example, a reduction electrode for performing a reduction reaction of at least one reducible material (substance to be reduced). Examples of the reducible material include nitrogen and carbon dioxide. By reducing the reducible material, a reduction product can be produced.

The cathode 11 reduces, for example, carbon dioxide supplied as gas of the reducible material or carbon dioxide contained in a first electrolytic solution (cathode solution) to produce a carbon compound that is the reduction product. Examples of the carbon compound include carbon monoxide, formic acid, methanol, methane, ethanol, ethane, ethylene, formaldehyde, ethylene glycol, acetic acid, propanol, and the like. The cathode 11 may cause a side reaction for producing hydrogen by a reduction reaction of water together with the reduction reaction of carbon dioxide. The cathode 11 may reduce, for example, nitrogen supplied as the gas of the reducible material to produce ammonia that is the reduction product.

The cathode 11 has, for example, a reduction catalyst for promoting a reduction reaction for reducing the reducible material to produce the reduction product. The reduction catalyst can be formed using, for example, a material which decreases an activation energy for reducing the reducible material. In other words, the reduction catalyst can be formed using, for example, a material which decreases the overvoltage when producing the reduction product by the reduction reaction of the reducible material.

The cathode 11 can be formed using, for example, a metal material or a carbon material. Examples of the metal material include metals such as gold, aluminum, copper, silver, platinum, palladium, zinc, mercury, indium, nickel, and titanium, alloys containing any of these metals, and the like. Examples of the carbon material include graphene, carbon nanotube (CNT), fullerene, ketjen black, and the like. Note that the material is not limited to these, and the cathode 11 may be formed using, for example, a metal complex such as a Ru complex or a Re complex, or an organic molecule having an imidazole skeleton or a pyridine skeleton. The cathode 11 may be formed using a mixture of a plurality of materials. The cathode 11 may have, for example, a structure in which the reduction catalyst in a thin film form, a lattice form, a granular form, a wire form, or the like is provided on a conductive base material. The type of the reduction product produced by the reduction reaction differs also depending on the type of the reduction catalyst.

The anode 12 is, for example, an oxidation electrode for causing an oxidation reaction of at least one oxidizable material (substance to be oxidized). Examples of the oxidizable material include water. The anode 12 oxidizes, for example, the oxidizable material such as a substance or ions in a second electrolytic solution (anode solution) to produce an oxidation product such as oxygen.

The anode 12 has, for example, an oxidation catalyst for promoting the oxidation reaction that oxidizes water to produce oxygen. The oxidation catalyst can be formed using, for example, a material which decreases activation energy in oxidizing the oxidizable material, in other words, a material which decreases a reaction overpotential. Examples of the oxidation reaction in the anode 12 include a reaction of oxidizing water to produce oxygen or a hydrogen peroxide solution, a reaction of oxidizing chloride ions (Cl⁻) to produce chlorine, a reaction of oxidizing carbonate ions or hydrogen carbonate ions to produce carbon dioxide, and the like.

Examples of the oxidation catalyst include a metal material. Examples of the metal material include ruthenium, iridium, platinum, cobalt, nickel, iron, manganese, tantalum, zirconium, tin, and the like. Examples of the metal material further include binary metal oxide, ternary metal oxide, quaternary metal oxide, and the like. Examples of the binary metal oxide include manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), and the like. Examples of the ternary metal oxide include nickel-iron oxide (Ni-Fe-O), nickel-cobalt oxide (Ni-Co-O), lanthanum-cobalt oxide (La-Co-O), nickel-lanthanum oxide (Ni-La-O), strontium-iron oxide (Sr-Fe-O), and the like. Examples of the quaternary metal oxide include lead-ruthenium-iridium oxide (Pb-Ru-Ir-O), lanthanum-strontium-cobalt oxide (La-Sr-Co-O), and the like. Note that the material is not limited to these, and the oxidation catalyst may be formed using a metal hydroxide containing metal such as cobalt, nickel, iron, or manganese, or a metal complex such as a ruthenium complex or an iron complex. Further, the oxidation catalyst may be formed using a mixture of a plurality of materials.

The anode 12 may be formed using a composite material containing both the oxidation catalyst and a conductive material. Examples of the conductive material include carbon materials such as carbon black, activated carbon, fullerene, carbon nanotube, graphene, ketjen black, and diamond, transparent conductive oxides such as indium tin oxide (ITO), zinc oxide (ZnO), fluorine-doped tin oxide (FTO), aluminum-doped zinc oxide (AZO), and antimony-doped tin oxide (ATO), metals such as copper, aluminum, titanium, nickel, silver, tungsten, cobalt, and gold, and an alloy containing at least one of these metals. For example, the anode 12 may have a structure in which the oxidation catalyst having a thin film form, a lattice form, a granular form, a wire form, or the like is provided on a conductive base material. The conductive base material can be formed using, for example, a metal material containing titanium, a titanium alloy, or stainless steel.

The separator 13 is provided between the cathode 11 and the anode 12. The separator 13 can separate a cathode chamber 140 and an anode chamber 150. The separator 13 allows ions such as a hydrogen ion (H⁺), a hydroxide ion (OH⁻), a hydrogen carbonate ion (HCO₃⁻), and a carbonate ion (CO₃²⁻) to move through. With the separator 13, an electrolysis cell having a two-chamber structure can be formed. The separator 13 may be provided in contact with the cathode 11 and the anode 12.

The separator 13 can be formed using, for example, a membrane selectively allowing anions or cations to flow through. Consequently, it is possible to make the composition of the second electrolytic solution in contact with the anode 12 different from the composition of the first electrolytic solution in contact with the cathode 11, and it is possible to promote the reduction reaction or the oxidation reaction according to an ion intensity difference or pH difference. The separator 13 may have a function of allowing the permeation of part of ions contained in the electrolytic solutions in which the cathode 11 and the anode 12 are immersed, that is, a function of blocking one or more types of ions contained in the electrolytic solutions. This makes it possible, for example, to make the two electrolytic solutions different in pH or the like. Further, as for the blocking of the ions, the separator 13 may be a separator that does not completely block part of ions but exhibits the effect to an extent of limiting a movement amount of ion species.

The separator 13 can be formed using, for example, an ion exchange membrane such as NEOSEPTA (registered trademark) of ASTOM Corporation, SELEMION (registered trademark) and Aciplex (registered trademark) of AGC Inc., Fumasep (registered trademark) and fumapem (registered trademark) of Fumatech BWT GmbH, Nafion (registered trademark) of DuPont, which is a fluorocarbon resin formed of sulfonated and polymerized tetrafluoroethylene, lewabrane (registered trademark) of LANXESS AG, IONSEP (registered trademark) of IONTECH Inc., Mustang (registered trademark) of PALL Corporation, relax (registered trademark) of Mega A.S., GORE-TEX (registered trademark) of W.L. Gore & Associates GmbH, Sustainion (registered trademark) of DIOXIDE MATERIALS, or PiperION (registered trademark) of Versogen. The ion exchange membrane may be formed using a membrane whose basic structure is a hydrocarbon. An anion exchange membrane may be formed using, for example, a membrane having an amine group. In the case where there is a pH difference between the first electrolytic solution and the second electrolytic solution, by forming the separator 13 using a bipolar membrane in which a cation exchange membrane and an anion exchange membrane are stacked, it is possible to use it while keeping the pHs of these electrolytic solutions stable.

The separator 13 may be formed using, for example, a silicone resin, a material such as a fluorine-based resin such as perfluoroalkoxyalkane (PFA), a perfluoroethylene-propane copolymer (FEP), polytetrafluoroethylene (PTFE), an ethylene-tetrafluoroethylene copolymer (ETFE), polyvinylidene fluoride (PVDF), polychlorotrifluoroethylene (PCTFE), an ethylene-chlorotrifluoroethylene copolymer (ECTFE), or polyethersulfone (PES), a porous membrane of ceramic, a filling filled with a glass filter or agar, or an insulating porous body such as zeolite or oxide. A hydrophilic porous membrane is especially preferable as the material of the separator 13 because its clogging due to bubbles can be reduced.

The cathode 11, the anode 12, and the separator 13 are stacked to form an electrolysis cell. The electrochemical reaction structure 10 may have an electrolysis cell stack in which a plurality of electrolysis cells are stacked. Forming the electrolysis cell stack results in an increase in reaction amount of the carbon dioxide per unit area, enabling an increase in production amount of the reduction product. The number of the plurality of electrolysis cells stacked is preferably, for example, 10 or more and 150 or less.

The flow path plate 14 forms the cathode chamber 140. The cathode chamber 140 is provided on a surface of the flow path plate 14 while facing the cathode 11 and can form a cathode flow path. The cathode flow path allows a cathode fluid containing the reducible material and the reduction product to flow. The cathode chamber 140 has an inlet for supplying fluid to the cathode chamber 140 and an outlet for discharging fluid from the cathode chamber 140. The surface shape of the cathode flow path is, but is not limited to, for example, a serpentine shape. The flow path plate 14 can be formed using a conductive material such as a metal material or a carbon material.

The flow path plate 15 forms the anode chamber 150. The anode chamber 150 is provided on a surface of the flow path plate 15 while facing the anode 12 and can form an anode flow path. The anode flow path allows an anode fluid containing the oxidizable material and the oxidation product to flow. The anode chamber 150 has an inlet for supplying fluid to the anode chamber 150 and an outlet for discharging fluid from the anode chamber 150. The surface shape of the anode flow path is, but is not limited to, for example, a serpentine shape. The flow path plate 15 can be formed using a conductive material such as a metal material or a carbon material.

The current collector 16 is electrically connected to the cathode 11. The current collector 16 may be provided, for example, on a side of the flow path plate 14 opposite to the cathode 11 and electrically connected to the cathode 11 through the flow path plate 14. The current collector 17 is electrically connected to the anode 12. The current collector 17 may be provided, for example, on a side of the flow path plate 15 opposite to the anode 12 and electrically connected to the anode 12 through the flow path plate 15. The current collector 16 and the current collector 17 can be formed using a conductive material containing a metal element such as titanium.

The current collector 16 and the current collector 17 may be connected to a power source 20. The power source 20 can supply power, for example, to the electrochemical reaction structure 10. The power source 20 can supply the electrochemical reaction structure 10 with a voltage or a current for causing electrolytic reactions such as the oxidation reaction and the reduction reaction and is electrically connected to the cathode 11 and the anode 12. The reduction reaction in the cathode 11 and the oxidation reaction in the anode 12 are caused using the electric energy supplied from the power source 20. The power source 20 and the current collector 16 are connected by wiring, and the power source 20 and the current collector 17 are connected by wiring, for instance. Between the electrochemical reaction structure 10 and the power source 20, electric devices such as an inverter, a converter, and a battery may be installed as required. The method of driving the electrochemical reaction structure 10 may be of a constant-voltage type or a constant-current type.

The power source 20 may be an ordinary commercial power source, battery, or the like, or may be a power source that converts renewable energy into electric energy and supplies it. Examples of the power source include a power source that converts kinetic energy or potential energy such as wind power, hydropower, geothermal power, or tidal power into electric energy, a power source such as a solar cell having a photoelectric conversion element that converts light energy into electric energy, a power source such as a fuel cell or a storage battery that converts chemical energy into electric energy, and a power source such as a device that converts vibrational energy such as sound into electric energy. The photoelectric conversion element has a function of charge separation using the energy of irradiated light such as sunlight. Examples of the photoelectric conversion element include a pin-junction solar cell, a pn-junction solar cell, an amorphous silicon solar cell, a multijunction solar cell, a monocrystalline silicon solar cell, a polycrystalline silicon solar cell, a dye-sensitized solar cell, and an organic thin-film solar cell. Further, the photoelectric conversion element may be stacked with at least one of the cathode 11 and the anode 12 inside the electrochemical reaction structure 10.

The power source 20 is capable of adjusting, for example, the current or the voltage that is to be supplied to the electrochemical reaction structure 10. The power source 20 may have a power controller that adjusts, for example, the current or the voltage that is to be supplied to the electrochemical reaction structure 10. The power source 20 may have a function of adjusting a pressure in the cathode chamber 140 or a pressure in the anode chamber 150 by adjusting the current or the voltage that is to be supplied to the electrochemical reaction structure 10. The power source 20 may be provided outside the electrolysis device 1.

The electrolytic reactions such as the oxidation reaction and the reduction reaction by the electrochemical reaction structure 10 are preferably performed under a temperature that is room temperature (for example, 25°C) or higher and 100°C or lower and does not cause the electrolytic solutions to vaporize. The above temperature is preferably 60°C or higher and 95°C or lower, and more preferably 60°C or higher and 80°C or lower. To make the temperature lower than room temperature, a cooling device such as a chiller is required, which may lower the overall energy efficiency of the system. A temperature over 100°C causes the water of the electrolytic solutions to turn into vapor to increase resistance, which may reduce electrolysis efficiency.

Current density of the cathode 11 is not particularly limited, but the current density is preferably higher in order to increase the production amount of the reduction product per unit area. The current density is preferably 100 mA/cm² or more and 1.5 A/cm² or less, and more preferably 300 mA/cm² or more and 700 mA/cm² or less. A current density of less than 100 mA/cm² results in a small production amount of the reduction product per unit area, resulting in the need for a large area. A current density of more than 1.5 A/cm² results in an increase in the hydrogen-producing side reaction to decrease the concentration of the reduction product.

In the case where an increase in the current density is accompanied by an increase in Joule heat, the temperature rises to an appropriate temperature or higher, and therefore a cooling mechanism may be provided in or near the electrochemical reaction structure 10. The cooling mechanism may be of a water cooling type or an air cooling type. The temperature of the electrochemical reaction structure 10, even if higher than room temperature, may be left as it is as long as it is 100°C or lower.

The flow path P1 is connected to the inlet of the cathode chamber 140. Through the flow path P1, a cathode supply fluid to be supplied to the cathode chamber 140 can flow. The cathode supply fluid contains the reducible material such as carbon dioxide. The cathode supply fluid may be gas containing a gaseous reducible material or a first electrolytic solution containing the reducible material.

The flow path P1 may be connected to a reducible material supply source. The reducible material supply source may have a reducible material separation and recovery device or may be connected to the reducible material separation and recovery device. A reducible material gas from the reducible material separation and recovery device can be supplied to the flow path P1, for example, directly or after being stored once. Examples of the reducible material supply source include a thermal power station, facilities having various types of incinerators or combustion furnaces such as a waste incinerator, a steel plant, and facilities having a blast furnace. The reducible material supply source is not limited to any of these facilities and may be any other factory where the reducible material is generated.

The flow path P2 is connected to the outlet of the cathode chamber 140. Through the flow path P2, a cathode discharge fluid discharged from the cathode chamber 140 can flow. The cathode discharge fluid contains the carbon compound being one example of the reduction product and hydrogen produced through the reduction reaction in the cathode 11, and part of the reducible material gas or part of the first electrolytic solution contained in the cathode supply fluid.

The flow path P3 is connected to the inlet of the anode chamber 150. Through the flow path P3, an anode supply fluid to be supplied to the anode chamber 150 can flow. The anode supply fluid contains water or a second electrolytic solution. The flow path P3 may be connected to an anode solution supply source. The anode solution supply source can supply, for example, the second electrolytic solution to be used for the anode supply fluid.

The flow path P4 is connected to the outlet of the anode chamber 150. Through the flow path P4, an anode discharge fluid discharged from the anode chamber 150 can flow. The anode discharge fluid contains, for example, gaseous oxygen produced through the oxidation reaction in the anode 12, the reducible material that moves from the cathode chamber 140 or from the electrolytic solution, and part of the water or the second electrolytic solution contained in the anode supply fluid.

The flow path P2 may be connected to a valuable material production device. Examples of the valuable material production device include a chemical synthesis device that produces a valuable material through a chemical synthesis using a raw material such as carbon monoxide. Examples of the valuable material include methanol produced by a methanol production device, hydrocarbon, synthetic gasoline, light oil, and jet fuel produced by a Fischer-Tropsch reactor, and an olefin compound produced by an olefin production device. Providing the valuable material production device at a subsequent stage of the electrochemical reaction structure 10 makes it possible to produce a valuable material having a high added value from the products in the electrochemical reaction structure 10.

The type of the chemical synthesis device is not particularly limited as long as it is capable of synthesizing, through a reaction, another substance from the reduction product produced in the cathode 11. Examples of the reaction caused by the chemical synthesis device using the reduction product include a chemical reaction, an electrochemical reaction, and a biological conversion reaction using algae, enzyme, yeast, or bacteria.

The flow path P2 may be connected to a product separator instead of the valuable material production device. The product separator is capable of separating a carbon compound such as carbon monoxide which is a product, by separating surplus carbon dioxide from the cathode discharge fluid or removing water in the cathode discharge fluid. For example, when the carbon monoxide gas is produced in the electrochemical reaction structure 10, by using, as a raw material, a mixed gas containing the produced carbon monoxide gas and a hydrogen gas as a by-product in the reduction reaction, it is possible to produce methanol through a methanol synthesis or produce jet fuel, light oil, or the like through a Fischer-Tropsch synthesis. Not limited to the above, the flow path P2 may be connected to a tank storing gas containing the carbon compound such as carbon monoxide, instead of the valuable material production device.

The first electrolytic solution is preferably a solution high in absorptance of the reducible material. A form of existence of the reducible material in the first electrolytic solution is not necessarily limited to a dissolved state, and the reducible material may be in a mixed state as bubbles in the first electrolytic solution. Examples of the electrolytic solution containing the reducible material include aqueous solutions containing hydrogen carbonate or carbonate such as lithium hydrogen carbonate (LiHCO₃), sodium hydrogen carbonate (NaHCO₃), potassium hydrogen carbonate (KHCO₃), cesium hydrogen carbonate (CsHCO₃), sodium carbonate (Na₂CO₃), and potassium carbonate (K₂CO₃), phosphoric acid, boric acid, or the like. The electrolytic solution containing the reducible material may contain any of alcohols such as methanol and ethanol, and ketones such as acetone, or may be an alcohol solution or a ketone solution. The first electrolytic solution may be an electrolytic solution containing a reducible material absorbent that lowers the reduction potential of the reducible material, has high ion conductivity, and absorbs the reducible material.

As the electrolytic solution such as the first electrolytic solution and the second electrolytic solution, for example, a solution containing water, for example, an aqueous solution containing an arbitrary electrolyte can be used. This solution is preferably an aqueous solution promoting the oxidation reaction of water. Examples of the aqueous solution containing an electrolyte include aqueous solutions containing a phosphate ion (PO₄²⁻), a borate ion (BO₃³⁻), a sodium ion (Na⁺), a potassium ion (K⁺), a calcium ion (Ca²⁺), a lithium ion (Li⁺), a cesium ion (Cs⁺), a magnesium ion (Mg²⁺), a chloride ion (Cl⁻), a hydrogen carbonate ion (HCO₃⁻), a carbonate ion (CO₃⁻), and a hydroxide ion (OH⁻).

As the aforesaid electrolytic solution, for example, usable is an ionic liquid that is formed of salt of anions such as imidazolium ions or pyridinium ions and anions such as BF₄⁻ or PF₆⁻ and that is in a liquid form in a wide temperature range, or its aqueous solution. Other examples of the electrolytic solution include solutions of amine such as ethanolamine, imidazole, and pyridine, and their aqueous solutions. Examples of the amine include primary amine, secondary amine, and tertiary amine. These electrolytic solutions may be high in ion conductivity, have a property of absorbing the reducible material, and have a characteristic of decreasing reduction energy.

Examples of the primary amine include methylamine, ethylamine, propylamine, butylamine, pentylamine, and hexylamine. A hydrocarbon of the amine may be replaced by alcohol, halogen, or the like. Examples of the amine whose hydrocarbon is replaced include methanolamine, ethanolamine, and chloromethylamine. Further, an unsaturated bond may be present therein. The same applies to hydrocarbons of the secondary amine and the tertiary amine.

Examples of the secondary amine include dimethylamine, diethylamine, dipropylamine, dibutylamine, dipentylamine, dihexylamine, dimethanolamine, diethanolamine, and dipropanolamine. The replaced hydrocarbons may be different. This also applies to the tertiary amine. Examples of one whose hydrocarbons are different include methylethylamine and methylpropylamine.

Examples of the tertiary amine include trimethylamine, triethylamine, tripropylamine, tributylamine, trihexylamine, trimethanolamine, triethanolamine, tripropanolamine, tributanolamine, trihexanolamine, methyldiethylamine, and methyldipropylamine.

Examples of the cation of the ionic liquid include a 1-ethyl-3-methylimidazolium ion, a 1-methyl-3-propylimidazolium ion, a 1-butyl-3-methylimidazole ion, a 1-methyl-3-pentylimidazolium ion, and a 1-hexyl-3-methylimidazolium ion.

The second position of the imidazolium ion may be replaced. Examples of the cation resulting from the replacement of the second position of the imidazolium ion include a 1-ethyl-2,3-dimethylimidazolium ion, a 1,2-dimethyl-3-propylimidazolium ion, a 1-butyl-2,3-dimethylimidazolium ion, a 1,2-dimethyl-3-pentylimidazolium ion, and a 1-hexyl-2,3-dimethylimidazolium ion.

Examples of the pyridinium ion include methylpyridinium, ethylpyridinium, propylpyridinium, butylpyridinium, pentylpyridinium, and hexylpyridinium. In the imidazolium ion and the pyridinium ion, an alkyl group may be replaced, or an unsaturated bond may be present.

Examples of the anion include a fluoride ion (F⁻), a chloride ion (Cl⁻), a bromide ion (Br⁻), an iodide ion (I⁻), BF₄⁻, PF₆⁻, CF₃COO⁻, CF₃SO₃⁻, NO₃⁻, SCN⁻, (CF₃SO₂)₃C⁻, bis(trifluoromethoxysulfonyl)imide, bis(trifluoromethoxysulfonyl)imide, and bis(perfluoroethylsulfonyl)imide. The ionic liquid may be composed of dipolar ions formed of the cations and the anions that are connected by hydrocarbons. Note that a buffer solution such as a potassium phosphate solution may be supplied to the anode chamber 150.

The second electrolytic solution contains water as the oxidizable material. Varying the amount of the water contained in the first and second electrolytic solutions or changing components of the electrolytic solution can change reactivity to change the selectivity of the substance to be reduced or a ratio of produced substances. The first and second electrolytic solutions may contain a redox couple as required. Examples of the redox couple include Fe³⁺/Fe²⁺, IO³⁻/I⁻, and the like.

FIG. 2 is a schematic diagram illustrating a configuration example of an electrolysis cell stack including the electrochemical reaction structure 10. As illustrated in FIG. 2, the electrolysis device 1 has the electrolysis cell stack formed by stacking a plurality of electrolysis cells EC. The number of stacked layers is preferably, for example, 10 or more and 150 or less. In the case where the number is less than 10, the production amount of an electrolysis product becomes small to decrease the reduction product production capacity. Besides, in the case where the number is more than 150, it becomes difficult to assemble cells in manufacture to possibly decrease the yield of good products and deteriorate the gas distribution between cells.

The electrolysis device 1 further has flow path plates 170 between the plurality of electrolysis cells EC. The flow path plates 170 each have the cathode chamber 140 provided on the cathode 11 side and the anode chamber 150 provided on the anode 12 side. One end of the electrolysis cell stack is electrically connected to the current collector 16 through the flow path plate 14. The other end of the electrolysis cell stack is electrically connected to the current collector 17 through the flow path plate 15. The current collector 16 and the current collector 17 are connected to the power source 20 as in the electrolysis device illustrated in FIG. 1.

The plurality of cathode flow paths of the plurality of electrolysis cells EC are mutually connected in parallel. The inlets of the plurality of cathode flow paths can be connected to the flow path P1 using, for example, a manifold-type pipe. The outlets of the plurality of cathode flow paths can be connected to the flow path P2 using, for example, a manifold-type pipe.

The plurality of anode flow paths of the plurality of electrolysis cells EC are mutually connected in parallel. The inlets of the plurality of anode flow paths can be connected to the flow path P3 using, for example, a manifold-type pipe. The outlets of the plurality of anode flow paths can be connected to the flow path P4 using, for example, a manifold-type pipe.

The electrolysis device 1 further has a flow rate controller 31a and a controller 40a.

The flow rate controller 31a can control the flow rate of, for example, the cathode supply fluid flowing through the flow path P1. The flow rate controller 31a may be provided in the middle of the flow path P1 as illustrated in FIG. 1. The flow rate controller 31a includes, for example, a flow rate controlling valve. The flow rate controller 31a is connected to, for example, the controller 40a.

The controller 40a can control the flow rate controller 31a. The controller 40a may be composed using, for example, hardware using a processor or the like. Note that each operation may be executed by storing each operation as an operation program in a computer-readable recording medium such as a memory and reading the operation program stored in the recording medium as needed by hardware. The memory is provided inside or outside the controller 40a.

Next, a method of controlling the electrolysis device 1 will be explained. Here, the case of mainly reducing carbon dioxide to produce carbon monoxide and oxidizing water to produce oxygen will be explained. When the cathode supply fluid containing carbon dioxide is supplied to the cathode chamber 140, the anode supply fluid containing the second electrolytic solution is supplied to the anode chamber 150, and a voltage equal to or more than a bath voltage is applied between the cathode 11 and the anode 12 by power supply from the power source 20, the oxidation reaction of water occurs near the anode 12 that is in contact with the second electrolytic solution. As illustrated in Expression (1) below, the oxidation reaction of water contained in the second electrolytic solution occurs to lose electrons and produce oxygen and hydrogen ions. Part of the produced hydrogen ions move to the cathode chamber 140 through the separator 13.

2H₂O → 4H⁺ + O₂ + 4e⁻ ... (1)

When the hydrogen ions (H⁺) produced at the anode 12 side reach the vicinity of the cathode 11 and electrons (e⁻) are supplied from the power source 20 to the cathode 11, a reduction reaction of carbon dioxide occurs. As illustrated in Formula (2) below, carbon dioxide is reduced by the hydrogen ions (H⁺) moved to the vicinity of the cathode 11 and the electrons (e⁻) supplied from the power source 20 to produce carbon monoxide.

2CO₂ + 4H⁺ + 4e⁻ → 2CO + 2H₂O ... (2)

A gas component contained in the anode discharge fluid discharged from the anode chamber 150 is mainly the oxygen gas as shown in Formula (1) above. In the reactions in the cathode 11 and the anode 12, the carbon dioxide contained in the cathode supply fluid supplied to the cathode chamber 140 is mostly reduced in the cathode 11, but partly flows as carbon dioxide or as ions such as a carbonate ion (CO₃²⁻) or a hydrogen carbonate ion (HCO₃⁻) to the anode 12 side. When the pH of the anode solution (second electrolytic solution) becomes, for example, 6 or less, the carbonate ions or the hydrogen carbonate ions having moved to the anode 12 side come to be present as carbon dioxide due to a chemical equilibrium reaction, and are partly dissolved in the anode solution. A carbon dioxide gas that cannot be completely dissolved in the anode solution is contained together with the oxygen gas in the anode discharge fluid discharged from the anode chamber 150. Under typical operation conditions of the electrochemical reaction structure 10, an abundance ratio of the carbon dioxide gas to the oxygen gas in the anode discharge fluid sometimes increases up to, for example, 2:1.

The reduction product may contain carbon dioxide, carbon monoxide, and hydrogen produced through an electrolysis of water. The concentration of the hydrogen can be arbitrarily adjusted as desired depending on its usage. In the case of using the hydrogen in a chemical synthesis device, the cathode discharge fluid after the carbon dioxide is separated therefrom may be used so that a mixture of the carbon monoxide and the hydrogen is used. In the case of not using the hydrogen, only the carbon monoxide is separated from the cathode discharge fluid. In the case of producing methanol, by adjusting the number of moles of the hydrogen to about twice the number of moles of the carbon monoxide, it is possible to use the hydrogen produced in the cathode 11 as a valuable material. On the other hand, in the cathode 11, by inhibiting the hydrogen-producing side reaction by the reaction condition, it is also possible to adjust the concentration of the hydrogen in the reduction product, within a range of 0.1% or more and 5% or less in terms of volume percentage. This makes it possible to use the electrolysis device as a carbon monoxide production device that produces high-concentration carbon monoxide.

In the case of supplying the cathode supply fluid to a plurality of electrolysis cells EC via the flow path P1, the cathode supply fluid to be supplied to each electrolysis cell EC may vary in flow rate. The variation in flow rate causes variation in Faraday efficiency of the reduction product produced by each electrolysis cell EC, and becomes a factor of decreasing the production amount of the reduction product produced in the whole electrolysis cell stack below a desired amount.

Hence, the electrolysis device 1 uses the controller 40a to calculate the variation in the supply amount of the reducible material in the plurality of electrolysis cells EC, using first data indicating the relation between the supply amount of the reducible material in at least one of the plurality of electrolysis cells EC or at least one electrolysis cell EC corresponding to at least one of plurality of electrolysis cells EC and the Faraday efficiency of the reduction product, and using second data indicating the Faraday efficiency of the reduction product in the whole of the electrolysis cell stack, and the flow rate controller 31a controls the operation of controlling the flow rate of the first fluid according to the variation.

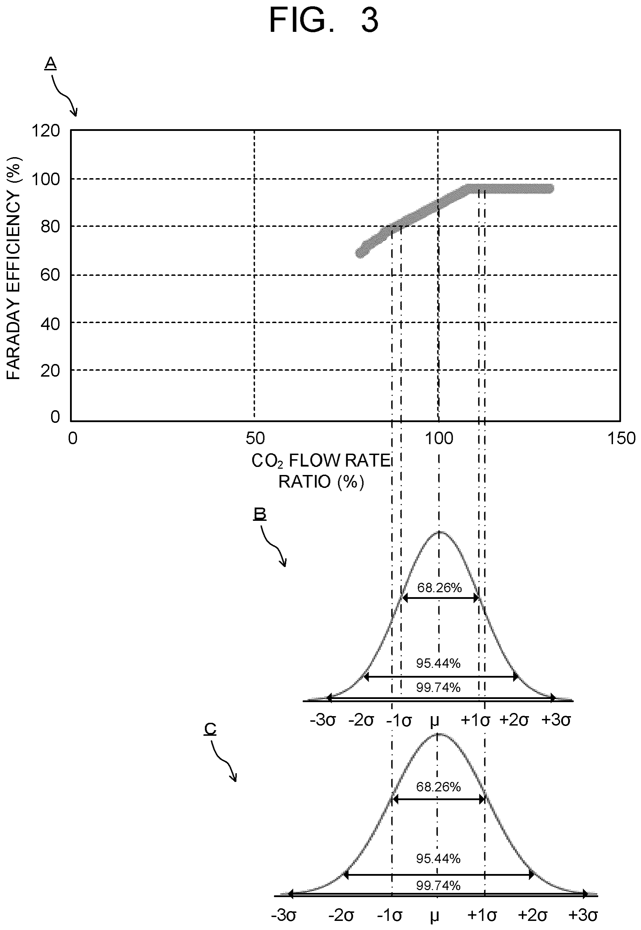

FIG. 3 is a graph for explaining an example method of controlling the electrolysis device 1. FIG. 3 illustrates Graph A, Graph B, and Graph C. Graph A illustrates an example of the relation between the supply amount of the reducible material in one of the plurality of electrolysis cells EC or a single electrolysis cell EC corresponding to one of the plurality of electrolysis cells EC and the Faraday efficiency of the reduction product. FIG. 3 illustrates an example of the Faraday efficiency of carbon monoxide in the case of introducing the cathode supply fluid containing carbon dioxide into the electrolysis device 1 illustrated in FIG. 1 with its flow rate changed and converting it into carbon monoxide. Note that the data in Graph A representing the relation between the supply amount of the reducible material and the Faraday efficiency of the reduction product may be generated using not only the one of the plurality of electrolysis cells EC or the single electrolysis cell EC but also two or more and less than all of electrolysis cells of the plurality of electrolysis cells EC, for example, two or more and ten or less electrolysis cells

The Faraday efficiency is an index indicating how efficiently the supplied current was used for the target chemical reaction in the electrochemical reaction. Specifically, it indicates the proportion of the current to be used for the reduction reaction of the reducible material in the total current. For example, in the case of reducing carbon dioxide to produce carbon monoxide, the Faraday efficiency is calculated from the amount of the produced carbon monoxide and the current amount supplied. A higher Faraday efficiency means that more current is used for the target reduction reaction.

A CO₂ flow rate ratio is a ratio (%) of the CO₂ flow rate (supply flow rate) to be supplied with respect to a CO₂ theoretical flow rate. The CO₂ flow rate ratio of 100% means that the CO₂ flow rate to be supplied is the flow rate of carbon dioxide when necessary current is entirely used for two-electron reduction of carbon dioxide when carbon dioxide is converted into carbon monoxide (equal to the CO₂ theoretical flow rate). In an ordinary case, when carbon dioxide is entirely reduced to carbon monoxide, the same amount of carbon dioxide as that carbon dioxide moves from the cathode flow path to the anode flow path, so that the flow rate twice that amount is assumed to be the CO₂ flow rate ratio of 100% (CO₂ theoretical flow rate). At this time, 1/2 of the flow rate of carbon dioxide is converted to carbon monoxide at the cathode 11, and the remaining 1/2 moves to the anode 12 side, becomes gas, and moves to the flow path P4. In order to prevent carbon dioxide from moving from the cathode 11 side to the anode 12 side, in the case of electrolysis device 1 having the separator 13 being a bipolar membrane, the electrolysis device 1 is driven to measure the movement amount of the carbon dioxide, and defines, as the CO₂ flow rate ratio of 100%, the flow rate obtained by adding the amount of carbon dioxide when the current necessary in reducing carbon dioxide to produce carbon monoxide is entirely used for the two-electron reduction of carbon dioxide and the amount of carbon dioxide moved at that time.

As illustrated in Graph A, in a range where the CO₂ flow rate ratio exceeds 100%, the Faraday efficiency of carbon monoxide is close to 100%, whereas the Faraday efficiency of carbon monoxide decreases near the CO₂ flow rate ratio of 100% and further decreases at a CO₂ flow rate ratio of less than 100%.

The first data indicating the relation between the supply amount of the reducible material in one of the plurality of electrolysis cells EC and the Faraday efficiency of the reduction product may be acquired using one of the plurality of electrolysis cells EC in the electrolysis cell stack. In this case, it is preferable to provide at least one valve in the middle of the flow path P1 to supply the cathode supply fluid to only one of the plurality of electrolysis cells EC and to stop the supply of the cathode supply fluid to the remaining of the plurality of electrolysis cells EC. The supply of the cathode supply fluid is stopped by the valve and thereby the cathode supply fluid can be supplied only to one arbitrary electrolysis cell EC to acquire the data indicating the relation between the supply amount of the reducible material in one of the plurality of electrolysis cells EC and the Faraday efficiency of the reduction product.

When CO₂ is introduced into the electrolysis cell stack at a flow rate of the CO₂ flow rate ratio of 100%, CO₂ is supplied to each electrolysis cell EC while variation in the CO₂ flow rate is occurring in the plurality of electrolysis cells EC around the CO₂ flow rate ratio of 100%.

As a value indicating the variation in the CO₂ flow rate of each electrolysis cell EC, a standard deviation (σ) can be used. The standard deviation is one scale for confirming variation in distribution of data. A case where the standard deviation is small means that the variation in the whole is small, whereas a case where the standard deviation is large means that the variation in the whole is large. The average value and the standard deviation clarify the distribution of the whole electrolysis cell stack. The standard deviation can be found by squaring a result obtained by subtracting an average Faraday efficiency of the reduction product from the Faraday efficiency of the reduction product in each electrolysis cell EC, finding its average, and calculating its square root.

Graph B and Graph C indicate variations in CO₂ flow rate ratio in each cell. Graph B indicates the standard deviation representing the variation in CO₂ flow rate ratio of an electrolysis cell stack with less variation, and Graph C indicates the standard deviation representing the variation in CO₂ flow rate of an electrolysis cell stack with a variation in CO₂ flow rate ratio greater than that of the electrolysis cell stack corresponding to Graph B.

In the case of Graph B, the increment in the Faraday efficiency by an increase in the CO₂ flow rate ratio is almost the same as the decrement in the Faraday efficiency by a decrease in the CO₂ flow rate ratio, so that the Faraday efficiency takes a value close to that of the Faraday efficiency at the CO₂ flow rate ratio of 10%.

In Graph C, the variation in the CO₂ flow rate ratio is large, so that when the CO₂ flow rate ratio increases, the increase in the Faraday efficiency stabilizes at an upper limit value, but when the CO₂ flow rate ratio decreases, the Faraday efficiency ratio largely decreases. Therefore, the Faraday efficiency of carbon monoxide in the whole electrolysis cell stack decreases to be lower than the Faraday efficiency at the CO₂ flow rate ratio of 100%.

For example, in the case where the Faraday efficiency of the electrolysis cell stack having 100 electrolysis cells EC is 90.1%, the variation in the CO₂ flow rate ratio of each electrolysis cell EC is present in a range of a CO₂ flow rate ratio of 91% to 109% having a linear slope with a distribution as in Graph B. Expressing it by a standard deviation, the variation is distributed in a range of σ = 7 point percent or less.

The Faraday efficiency can be calculated from the flow rate of the cathode supply fluid and the concentration of the reduction product. To calculate the Faraday efficiency, the electrolysis device 1 has a flowmeter 51a provided in the flow path P2. The flow rate of the cathode supply fluid flowing through the flow path P2 can be measured using the flowmeter 51a. The flowmeter 51a is connected, for example, to the controller 40a. Further, the electrolysis device 1 has a concentration meter 52a provided in the flow path P2. The concentration meter 52a is connected, for example, to the controller 40a. The concentration of the reduction product in the cathode supply fluid flowing through the flow path P2 can be measured using the flowmeter 51a. Also in the case of evaluating the characteristics in a single or a plurality of electrolysis cells EC to be used in order to grasp the characteristics in advance, and the case of evaluating the electrolysis cell stack, the above meters are necessary.

In order to stably operate the electrolysis device using the electrolysis cell stack, the characteristic data obtained by measuring in advance the relation between the flow rate of the reducible material and the Faraday efficiency of the reduction product as illustrated in Graph A is used as the first data by the controller 40a and compared with the second data indicating the Faraday efficiency of the electrolysis cell stack, and the flow rate of the reducible material is controlled from the comparison result, thereby enabling a stable operation.

At the time when operating the electrolysis device for a long time, the variation in the Faraday efficiency of each electrolysis cell EC of the electrolysis cell stack can be estimated from the change in cell voltage. The cell voltage varies between the case of introducing CO₂ at the CO₂ flow rate ratio of 100% and the case of introducing CO₂ at a CO₂ flow rate ratio of less than 100%. When the CO₂ flow rate ratio is less than 100%, the cell voltage takes a value lower than that of the cell voltage in the case of the CO₂ flow rate ratio of 100%. Therefore, by confirming the change in the voltage, it is possible to estimate the change in variation of the Faraday efficiency of each cell over time and control the CO₂ flow rate ratio.

As a method of estimating the variation during a long-time operation, a method of temporarily decreasing the current density can be used. When temporarily decreasing the current density, the CO₂ flow rate to the current density increases. By an increase rate of the Faraday efficiency at that time, the variation in the Faraday efficiency of the electrolysis cell stack can be estimated.

In the case of estimating the electrolysis cell stack, the flowmeter 51a and the concentration meter 52a can be provided in the electrolysis device 1 in which the electrolysis cell stack is incorporated. However, the electrolysis cell stack may be separately incorporated in a characteristics evaluation device, and then the electrolysis cell stack may be incorporated after the charcteristics are evaluated. In this case, the necessity of installing the flowmeter 51a and the concentration meter 52a which are installed in the flow path P2 in each device.

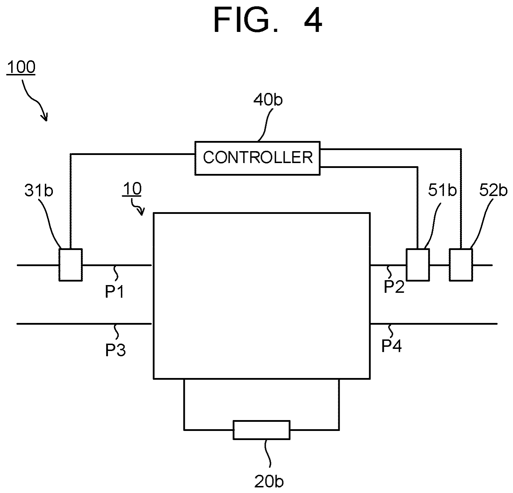

FIG. 4 is a schematic diagram illustrating a structure example of the characteristics evaluation device 100. To/from the characteristics evaluation device 100, the electrolysis cell stack including the electrochemical reaction structure 10 can be attached/detached. The characteristics evaluation device 100 has a flow rate controller 31b, a controller 40b, a flowmeter 51b, and a concentration meter 52b. The flow rate controller 31b corresponds to the flow rate controller 31a. The controller 40b corresponds to the controller 40a. The flowmeter 51b corresponds to the flowmeter 51a. The concentration meter 52b corresponds to the concentration meter 52a. For the other explanations of the flow rate controller 31b, the controller 40b, the flowmeter 51b, and the concentration meter 52b, the explanations of the flow rate controller 31a, the controller 40a, the flowmeter 51a, and the concentration meter 52a can be referred to as appropriate. The electrolysis system can be formed by combining the electrolysis device 1 and the characteristics evaluation device 100.

### EXAMPLES

### (Example 1)

A gas flowmeter and a gas concentration meter were installed in the flow path P2 to fabricate a carbon dioxide electrolysis device that is the electrolysis device 1 including the single electrolysis cell illustrated in FIG. 1. The cell area is 100 cm², and the current density is 300 mA/cm². By using this carbon dioxide electrolysis device, the characteristics of the CO₂ flow rate and a CO production Faraday efficiency were acquired. The CO production Faraday efficiency when the CO₂ flow rate ratio of 100% (0.42 × 10³ sccm) of the carbon dioxide electrolysis device was 90%.

Next, a carbon dioxide electrolysis device (first carbon dioxide electrolysis device) that is the electrolysis device 1 including the electrolysis cell stack illustrated in FIG. 2 was fabricated. The electrolysis cell stack is formed by stacking 100 carbon dioxide electrolysis cells. The electrolysis cell stack was incorporated in the carbon dioxide electrolysis device having a gas flowmeter and a gas concentration meter installed in the flow path P2.

When CO₂ was introduced into the fabricated electrolysis cell stack at a CO₂ flow rate ratio of 100% (42 × 10³ sccm) and the CO₂ flow rate of each cell was observed, it was found that there was a variation within 1 σ = 7 point percent around the CO₂ flow rate ratio of 100%. The CO production Faraday efficiency of that cell stack was 90.1%.

When a carbon dioxide electrolysis device (second carbon dioxide electrolysis device) similar to the first carbon dioxide electrolysis device was fabricated, CO₂ was introduced at a CO₂ flow rate ratio of 100% (42 × 10³ sccm), and the CO production Faraday efficiency was measured, the CO production Faraday efficiency was 87%. When the Faraday efficiency of a separately fabricated single cell was 90%, it was found that the variation in the CO₂ flow rate ratio was larger in standard deviation than that in the first carbon dioxide electrolysis device, and it was found that about 1 σ = about 10 point percent. This indicates that the increase/decrease in Faraday efficiency was canceled out by the increase in the number of electrolysis cells that is the CO₂ flow rate ratio where the Faraday efficiency decreases and the increase in the number of electrolysis cells that is the CO₂ flow rate ratio where the Faraday efficiency increases in the first carbon dioxide electrolysis device, but there are relatively more electrolysis cells of a CO₂ flow rate ratio of 109 % or more where the Faraday efficiency does not increase in the second carbon dioxide electrolysis device as compared with the first carbon dioxide electrolysis device.

Since it was found that the standard deviation was large as above, the characteristics of the carbon dioxide electrolysis device having the electrolysis cell stack was confirmed by controlling the flow rate controller 31a by the controller 40a to increase the CO₂ flow rate using the first data indicating the relation between the CO₂ flow rate measured in the carbon dioxide electrolysis device having the single electrolysis cell and the CO production Faraday efficiency and using the second data indicating the CO production Faraday efficiency of the second carbon dioxide electrolysis device, and introducing CO₂ at a flow rate of a CO₂ flow rate ratio of 105% (44 × 10³ sccm). It was found that even when the variation in CO₂ flow rate ratio was 1 σ = 10%, the CO production Faraday efficiency was 90.6% of the target. The regulation of the CO₂ flow rate using the first data and the second data as above makes it possible to adjust the CO production Faraday efficiency of each cell to a target amount. In this event, it is preferable to control the CO₂ flow rate to maintain the CO production Faraday efficiency of each cell at, for example, 90% or more.

As is found from the above, this control is not a control of adjusting the Faraday efficiency of each electrolysis cell EC in the electrolysis cell stack so that the Faraday efficiency of each electrolysis cell EC falls within a range of the CO₂ flow rate ratio of 109% or more in Graph A illustrated in FIG. 3 where the Faraday efficiency does not vary, but a control of deriving a value closest to the CO₂ flow rate ratio of 100% in a process of making it close to a required Faraday efficiency. This can control the decrease in electrolysis efficiency. If a control of making all of the cells have a CO₂ flow rate ratio of 109% or more, the CO₂ amount becomes larger than the required CO₂ amount, causing a problem where the CO₂ amount in the gas in the flow path P2 after the conversion becomes larger than the required amount.

### (Example 2)

A gas flowmeter and a gas concentration meter were installed in the flow path P2 as in Example 1 to fabricate a carbon dioxide electrolysis device that is the electrolysis device 1 having the single electrolysis cell illustrated in FIG. 1. The cell area is 100 cm², and the current density is 300 mA/cm². By using the carbon dioxide electrolysis device, the first data indicating the relation between the CO₂ flow rate and the CO production Faraday efficiency was acquired. The CO production Faraday efficiency when CO₂ was introduced at a CO₂ flow rate ratio of 100% (0.42 × 10³ sccm) of the carbon dioxide electrolysis device was 90%.

Next, a carbon dioxide electrolysis device (third carbon dioxide electrolysis device) that is the electrolysis device 1 including the electrolysis cell stack illustrated in FIG. 2 was fabricated. The electrolysis cell stack is formed by stacking 100 carbon dioxide electrolysis cells. The electrolysis cell stack was incorporated in the characteristics evaluation device 100 illustrated in FIG. 4 to measure the Faraday efficiency of the electrolysis cell stack. In the characteristics evaluation device 100, the flow rate controller 31b is connected to the flow path P1, and the flowmeter 51b and the concentration meter 52b are connected to the flow path P3. When CO₂ was introduced into the fabricated electrolysis cell stack at a CO₂ flow rate ratio of 100% (42 × 10³ sccm) and the CO₂ flow rate of each cell was observed, it was found that there was a variation within 1 σ = 7 point percent around the CO₂ flow rate ratio of 100%. The CO production Faraday efficiency of that cell stack was 90.1%.

When a carbon dioxide electrolysis device (fourth carbon dioxide electrolysis device) similar to the third carbon dioxide electrolysis device was separately fabricated and the electrolysis cell stack was incorporated in the characteristics evaluation device 100 similarly to the fourth carbon dioxide electrolysis device, and the CO production Faraday efficiency was measured at a CO₂ flow rate ratio of 100% (42 × 10³ sccm), the CO production Faraday efficiency was 87%. When the Faraday efficiency of a separately fabricated single cell was 90%, it was found that the variation in the CO₂ flow rate ratio was larger in standard deviation than that in the third carbon dioxide electrolysis device, and it was found that about 1 σ = about 12 point percent. This indicates that the increase/decrease in Faraday efficiency was canceled out by the increase in the number of electrolysis cells that is the CO₂ flow rate ratio where the Faraday efficiency decreases and the increase in the number of electrolysis cells that is the CO₂ flow rate ratio where the Faraday efficiency increases in the first carbon dioxide electrolysis device, but there are relatively more cells having a CO₂ flow rate ratio of 109 % or more where the Faraday efficiency does not increase in the second carbon dioxide electrolysis device as compared with the first carbon dioxide electrolysis device.

Since it was found that the standard deviation was large as above, the Faraday efficiency of the electrolysis cell stack was confirmed by controlling the flow rate controller 31a by the controller 40a to increase the CO₂ flow rate using the first data indicating the relation between the CO₂ flow rate measured in the carbon dioxide electrolysis device having the single electrolysis cell EC and the CO production Faraday efficiency and using the second data indicating the CO production Faraday efficiency of the electrolysis cell stack in the second carbon dioxide electrolysis device, and introducing CO₂ at a flow rate of CO₂ flow rate ratio of 106% (44.5 × 10³ sccm). It was found that even when the variation in CO₂ flow rate ratio was 1 σ = about 12%, the CO production Faraday efficiency was 90.6% of the target. Thereafter, an electrolysis device 1 incorporating the electrolysis cell stack was fabricated. The regulation of the CO₂ flow rate using the first data and the second data as above makes it possible to adjust the CO production Faraday efficiency of each cell to a target amount. In this event, it is preferable to control the CO₂ flow rate to maintain the CO production Faraday efficiency of each cell at, for example, 90% or more.

As is found from the above, this control is not a control of adjusting the Faraday efficiency of each electrolysis cell EC in the electrolysis cell stack so that the Faraday efficiency of each electrolysis cell EC falls within a range of the CO₂ flow rate ratio of 109% or more in Graph A illustrated in FIG. 3 where the Faraday efficiency does not vary, but a control of deriving a value closest to the CO₂ flow rate ratio of 100% in a process of making it close to a required Faraday efficiency. This can control the decrease in electrolysis efficiency. If a control of making all of the cells have a CO₂ flow rate ratio of 109% or more, the CO₂ amount becomes larger than the required CO₂ amount, causing a problem where the CO₂ amount in the gas in the flow path P2 after the conversion becomes larger than the required amount.

It should be noted that the configurations of the above-described arrangements are applicable in combination. Further, they are partly replaceable. While certain arrangements of the present invention have been described here, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

The above-described arrangements can be summarized into the following clauses.

### (Clause 1)

An electrolysis device including:
an electrolysis cell stack including:
   a plurality of electrolysis cells each having an anode configured to oxidize an oxidizable material to produce an oxidation product, a cathode configured to reduce a reducible material to produce a reduction product, a separator provided between the anode and the cathode, an anode flow path which faces on the anode and through which an anode fluid containing the oxidizable material flows, and a cathode flow path which faces on the cathode and through which a cathode fluid containing gas of the reducible material flows;
   a first flow path which is connected to each of inlets of the cathode flow paths of the plurality of electrolysis cells, and through which a first fluid to be supplied to each of the cathode flow paths and containing the gas of the reducible material flows; and
   a second flow path which is connected to each of outlets of the cathode flow paths of the plurality of electrolysis cells, and through which a second fluid discharged from each of the cathode flow paths and containing the reduction product flows;
a flow rate controller configured to control a flow rate of the first fluid flowing through the first flow path;
a controller configured to control the flow rate controller; a flowmeter configured to measure a flow rate of the second fluid; and
a concentration meter configured to measure a concentration of the reduction product in the second fluid, wherein:
   the controller calculates a variation in ratio of a supply flow rate to a theoretical flow rate of the reducible material in the plurality of electrolysis cells using first data indicating a relation between a supply amount of the reducible material in at least one of the plurality of electrolysis cells or at least one electrolysis cell corresponding to at least one of the plurality of electrolysis cells and a Faraday efficiency of the reduction product and using second data indicating a Faraday efficiency of the reduction product in a whole of the electrolysis cell stack, and controls an operation of the flow rate controller controlling the flow rate of the first fluid according to the variation; and
   the controller calculates the Faraday efficiency of the reduction product in the whole of the electrolysis cell stack from the measured flow rate and concentration to generate the second data.

### (Clause 2)

The electrolysis device according to clause 1, wherein
the flow rate of the first fluid is controlled to maintain the Faraday efficiency of the reduction product in an electrolysis cell largest in the variation among the plurality of electrolysis cells at 90% or more.

### (Clause 3)

The electrolysis device according to clause 1 of clause 2, wherein:
the oxidizable material contains water;
the oxidation product contains oxygen;
the reducible material contains carbon dioxide; and
the reduction product contains a carbon compound.

### (Clause 4)

An electrolysis system including:
an electrolysis device; and
a characteristics evaluation device configured to evaluate characteristics of the electrolysis device,
the electrolysis device including:
   an electrolysis cell stack including:
      a plurality of electrolysis cells each having an anode configured to oxidize an oxidizable material to produce an oxidation product, a cathode configured to reduce a reducible material to produce a reduction product, a separator provided between the anode and the cathode, an anode flow path which faces on the anode and through which an anode fluid containing the oxidizable material flows, and a cathode flow path which faces on the cathode and through which a cathode fluid containing gas of the reducible material flows;
      a first flow path which is connected to each of inlets of the cathode flow paths of the plurality of electrolysis cells, and through which a first fluid to be supplied to each of the cathode flow paths and containing the gas of the reducible material flows; and
      a second flow path which is connected to each of outlets of the cathode flow paths of the plurality of electrolysis cells, and through which a second fluid discharged from each of the cathode flow paths and containing the reduction product flows;
   a flow rate controller configured to control a flow rate of the first fluid;
   a controller configured to control the flow rate controller;
the characteristics evaluation device including:
   a flowmeter configured to measure a flow rate of the second fluid; and
   a concentration meter configured to measure a concentration of the reduction product in the second fluid, wherein:
      the controller is configured to calculate a variation in ratio of a supply flow rate to a theoretical flow rate of the reducible material in the plurality of electrolysis cells using a first data and a second data, and control an operation of the flow rate controller controlling the flow rate of the first fluid according to the variation, the first data indicating a relation between a supply amount of the reducible material in at least one of the plurality of electrolysis cells or at least one electrolysis cell corresponding to at least one of the plurality of electrolysis cells and a Faraday efficiency of the reduction product, and the second data indicating a Faraday efficiency of the reduction product in a whole of the electrolysis cell stack; and
      the characteristics evaluation device is configured to operate the electrolysis cell stack detached from the electrolysis device and attached to the characteristics evaluation device under a same operation condition as the electrolysis device, measure the flow rate of the second fluid and the concentration of the reduction product in the second fluid, and calculate the Faraday efficiency of the reduction product in the whole of the electrolysis cell stack from the measured flow rate and concentration to generate the second data.

### (Clause 5)

The electrolysis system according to clause 4, wherein
the flow rate of the first fluid is controlled to maintain the Faraday efficiency of the reduction product in an electrolysis cell largest in the variation among the plurality of electrolysis cells at 90% or more.

### (Clause 6)

The electrolysis system according to clause 4 or clause 5, wherein:
the oxidizable material contains water;
the oxidation product contains oxygen;
the reducible material contains carbon dioxide; and
the reduction product contains a carbon compound.

### (Clause 7)

A method of controlling an electrolysis device,
the electrolysis device including:
   an electrolysis cell stack including:
      a plurality of electrolysis cells each having an anode configured to oxidize an oxidizable material to produce an oxidation product, a cathode configured to reduce a reducible material to produce a reduction product, a separator provided between the anode and the cathode, an anode flow path which faces on the anode and through which an anode fluid containing the oxidizable material flows, and a cathode flow path which faces on the cathode and through which a cathode fluid containing gas of the reducible material flows;
      a first flow path which is connected to each of inlets of the cathode flow paths of the plurality of electrolysis cells, and through which a first fluid to be supplied to each of the cathode flow paths and containing the gas of the reducible material flows; and
      a second flow path which is connected to each of outlets of the cathode flow paths of the plurality of electrolysis cells, and through which a second fluid discharged from each of the cathode flow paths and containing the reduction product flows;
   a flow rate controller configured to control a flow rate of the first fluid flowing through the first flow path;
   a flowmeter configured to measure a flow rate of the second fluid; and
   a concentration meter configured to measure a concentration of the reduction product in the second fluid,
the method including:
   calculating a variation in ratio of a supply flow rate to a theoretical flow rate of the reducible material in the plurality of electrolysis cells using a first data and a second data, and controlling the flow rate of the first fluid according to the variation, the first data indicating a relation between a supply amount of the reducible material in at least one of the plurality of electrolysis cells or at least one electrolysis cell corresponding to at least one of the plurality of electrolysis cells and a Faraday efficiency of the reduction product, and the second data indicating a Faraday efficiency of the reduction product in a whole of the electrolysis cell stack; and
   calculating the Faraday efficiency of the reduction product in the whole of the electrolysis cell stack from the measured flow rate and concentration to generate the second data.

### (Clause 8)

The method of controlling an electrolysis device according to clause 7, wherein the flow rate of the first fluid is controlled to maintain the Faraday efficiency of the reduction product in an electrolysis cell largest in the variation among the plurality of electrolysis cells at 90% or more.

### (Clause 9)

The method of controlling an electrolysis device according to clause 7 or clause 8, wherein:
the oxidizable material contains water;
the oxidation product contains oxygen;
the reducible material contains carbon dioxide; and
the reduction product contains a carbon compound.

### (Clause 10)

A method of controlling an electrolysis system,
the electrolysis system including:
   an electrolysis device; and
   a characteristics evaluation device configured to evaluate characteristics of the electrolysis device,
   the electrolysis device including:
      an electrolysis cell stack including:
         a plurality of electrolysis cells each having an anode configured to oxidize an oxidizable material to produce an oxidation product, a cathode configured to reduce a reducible material to produce a reduction product, a separator provided between the anode and the cathode, an anode flow path which faces on the anode and through which an anode fluid containing the oxidizable material flows, and a cathode flow path which faces on the cathode and through which a cathode fluid containing gas of the reducible material flows;
         a first flow path which is connected to each of inlets of the cathode flow paths of the plurality of electrolysis cells, and through which a first fluid to be supplied to each of the cathode flow paths and containing the gas of the reducible material flows; and
         a second flow path which is connected to each of outlets of the cathode flow paths of the plurality of electrolysis cells, and through which a second fluid discharged from each of the cathode flow paths and containing the reduction product flows; and
      a flow rate controller configured to control a flow rate of the first fluid,
   the characteristics evaluation device including:
      a flowmeter configured to measure a flow rate of the second fluid; and
      a concentration meter configured to measure a concentration of the reduction product in the second fluid,
the method including:
   calculating a variation in ratio of a supply flow rate to a theoretical flow rate of the reducible material in the plurality of electrolysis cells using a first data and a second data, and controlling the flow rate controller to control the flow rate of the first fluid according to the variation, the first data indicating a relation between a supply amount of the reducible material in at least one of the plurality of electrolysis cells or at least one electrolysis cell corresponding to at least one of the plurality of electrolysis cells and a Faraday efficiency of the reduction product, and the second data indicating a Faraday efficiency of the reduction product in a whole of the electrolysis cell stack; and

   operating the electrolysis cell stack detached from the electrolysis device and attached to the characteristics evaluation device under a same operation condition as the electrolysis device, measuring the flow rate of the second fluid and the concentration of the reduction product in the second fluid, and calculating the Faraday efficiency of the reduction product in the whole of the electrolysis cell stack from the measured flow rate and concentration to generate the second data.

### (Clause 11)

The method of controlling an electrolysis system according to clause 10, wherein
the flow rate of the first fluid is controlled to maintain the Faraday efficiency of the reduction product in an electrolysis cell largest in the variation among the plurality of electrolysis cells at 90% or more.

### (Clause 12)

The method of controlling an electrolysis system according to clause 10 or clause 11, wherein:
the oxidizable material contains water;
the oxidation product contains oxygen;
the reducible material contains carbon dioxide; and
the reduction product contains a carbon compound.

## Claims

1. An electrolysis device comprising:
an electrolysis cell stack comprising:
a plurality of electrolysis cells each having an anode configured to oxidize an oxidizable material to produce an oxidation product, a cathode configured to reduce a reducible material to produce a reduction product, a separator provided between the anode and the cathode, an anode flow path which faces on the anode and through which an anode fluid containing the oxidizable material flows, and a cathode flow path which faces on the cathode and through which a cathode fluid containing gas of the reducible material flows;
a first flow path which is connected to each of inlets of the cathode flow paths of the plurality of electrolysis cells, and through which a first fluid to be supplied to each of the cathode flow paths and containing the gas of the reducible material flows; and
a second flow path which is connected to each of outlets of the cathode flow paths of the plurality of electrolysis cells, and through which a second fluid discharged from each of the cathode flow paths and containing the reduction product flows;
a flow rate controller configured to control a flow rate of the first fluid flowing through the first flow path;
a controller configured to control the flow rate controller;
a flowmeter configured to measure a flow rate of the second fluid; and
a concentration meter configured to measure a concentration of the reduction product in the second fluid, wherein:
the controller is configured to calculate a variation in ratio of a supply flow rate to a theoretical flow rate of the reducible material in the plurality of electrolysis cells using a first data and a second data, and control an operation of the flow rate controller controlling the flow rate of the first fluid according to the variation, the first data indicating a relation between a supply amount of the reducible material in at least one of the plurality of electrolysis cells or at least one electrolysis cell corresponding to at least one of the plurality of electrolysis cells and a Faraday efficiency of the reduction product, and the second data indicating a Faraday efficiency of the reduction product in a whole of the electrolysis cell stack; and
the controller is configured to calculate the Faraday efficiency of the reduction product in the whole of the electrolysis cell stack from the measured flow rate and concentration to generate the second data.

2. The electrolysis device according to claim 1, wherein
the flow rate of the first fluid is controlled to maintain the Faraday efficiency of the reduction product in an electrolysis cell largest in the variation among the plurality of electrolysis cells at 90% or more.

3. The electrolysis device according to claim 1 or claim 2, wherein:
the oxidizable material contains water;
the oxidation product contains oxygen;
the reducible material contains carbon dioxide; and
the reduction product contains a carbon compound.

4. The electrolysis device according to claim 3, wherein:
the carbon compound contains carbon monoxide.

5. A method of controlling an electrolysis device,
the electrolysis device comprising:
an electrolysis cell stack comprising:
a plurality of electrolysis cells each having an anode configured to oxidize an oxidizable material to produce an oxidation product, a cathode configured to reduce a reducible material to produce a reduction product, a separator provided between the anode and the cathode, an anode flow path which faces on the anode and through which an anode fluid containing the oxidizable material flows, and a cathode flow path which faces on the cathode and through which a cathode fluid containing gas of the reducible material flows;
a first flow path which is connected to each of inlets of the cathode flow paths of the plurality of electrolysis cells, and through which a first fluid to be supplied to each of the cathode flow paths and containing the gas of the reducible material flows; and
a second flow path which is connected to each of outlets of the cathode flow paths of the plurality of electrolysis cells, and through which a second fluid discharged from each of the cathode flow paths and containing the reduction product flows;
a flow rate controller configured to control a flow rate of the first fluid flowing through the first flow path;
a flowmeter configured to measure a flow rate of the second fluid; and
a concentration meter configured to measure a concentration of the reduction product in the second fluid,
the method comprising:
calculating a variation in ratio of a supply flow rate to a theoretical flow rate of the reducible material in the plurality of electrolysis cells using a first data and a second data, and controlling the flow rate of the first fluid according to the variation, the first data indicating a relation between a supply amount of the reducible material in at least one of the plurality of electrolysis cells or at least one electrolysis cell corresponding to at least one of the plurality of electrolysis cells and a Faraday efficiency of the reduction product, and the second data indicating a Faraday efficiency of the reduction product in a whole of the electrolysis cell stack; and
calculating the Faraday efficiency of the reduction product in the whole of the electrolysis cell stack from the measured flow rate and concentration to generate the second data.

6. The method according to claim 5, wherein
the flow rate of the first fluid is controlled to maintain the Faraday efficiency of the reduction product in an electrolysis cell largest in the variation among the plurality of electrolysis cells at 90% or more.

7. The method according to claim 5 or claim 6, wherein:
the oxidizable material contains water;
the oxidation product contains oxygen;
the reducible material contains carbon dioxide; and
the reduction product contains a carbon compound.

8. The method according to claim 7, wherein:
the carbon compound contains carbon monoxide.
